# EUROPEAN PATENT APPLICATION

(11) **EP 4 049 813 A1**
(43) Date of publication of application: **31.08.2022**
(21) Application number: 22158120.0
(22) Date of filing: 23.02.2022
(51) Int. Cl.: B26B 13/20

(54) **FINGER GRIP FOR SHEARS**

(30) Priority: 25.02.2021 US 202117184935; 17.02.2022 US 202217674691
(71) Applicant: Panosian, Michael H., Irvine, CA 92618 (US); Keeler, Joshua M., Irvine, CA 92618 (US)
(72) Inventor: Panosian, Michael H., Irvine, CA 92618 (US); Keeler, Joshua M., Irvine, CA 92618 (US)
(74) Representative: AWA Sweden AB

(57) **Abstract**

A shears 10 upper finger grip 12b has a lower substantially flat operating surface 12d arranged in a transverse plane substantially normal to a cutting plane CP and dimensioned and configured to enable substantially full insertion of a thumb metacarpal bone from a right lateral side and for receiving the ball of the thumb to enable the thumb to be moved to a position on a left lateral side to an orientation substantially parallel to the cutting plane and to position the hand's thenar eminence TE into abutment against the flat operating surface while positioning at least exterior right lateral portions 12e of the upper finger grip in abutment against the palm beyond the hand's thenar crease TC and into the region of at least one of the hand's palmar creases PC1, PC2 to enable the thenar eminence and palm of the hand to oppose the forces applied by the fingers acting on the lower finger grip 14b.

## Description

### CROSS-REFERENCE(S) TO RELATED APPLICATION(S)

The present application is a Continuation-In-Part (CIP) of, and claims the benefit of the filing date of US Application No. 17/184,935, filed on 25-February-2021, entitled " FINGER GRIP FOR SHEARS," the contents of which are hereby expressly incorporated by reference in their entirety, under 35 U.S.C. § 120.

### Technical Field

The present disclosure generally relates to hand operated cutting tools and, more specifically, to a finger gripping structure for cutting tools such as shears, snips and scissors.

### Brief Description of the Drawings

The drawings, when considered in connection with the following description, are presented for the purpose of facilitating an understanding of the subject matter sought to be protected.
FIGURE 1 is an example left (left side when looking from handles towards tip) perspective view of scissors or shears in accordance with the disclosure, shown in a fully closed condition;
FIGURE 2 is an example left lateral side view of the scissors or shears shown in FIGURE 1, showing in phantom outline the positions of the fingers of the hand during normal use;
FIGURE 3 is an example left lateral side view of the scissors or shears shown in FIGURE 1, showing in phantom outline the positions of the fingers of the hand during normal use of shears in a partially open condition;
FIGURE 4 is an example top (when looking from thumb loop of shears towards the fingers loop) view of the scissors or shears shown in FIGURES 1-3;
FIGURE 5 is an example bottom (opposite direction of top) view of the scissors or shears shown in FIGURES 1-4, showing in phantom outline the position of the hand during initial insertion of the thumb and prior to gripping of the handles;
FIGURE 6 is an example enlarged fragmented view, as viewed from the right (opposite direction of left) lateral side to show details of the configuration of the upper finger grip (thumb loop);
FIGURE 7 is an example cross-sectional view 7-7 of the upper finger grip of FIGURE 6;
FIGURE 8 is an example bottom view of the scissors or shears shown in the previous Figures, broken away to illustrate the lower configuration of the upper finger grip and the manner that it is arranged in relation to the thenar eminence and the palmer surfaces of the hand;
FIGURE 9 is example shears with both finger grips angularly offset from a center axis of the shears to position both grips above the axis (axis closest to lower finger grip);
FIGURE 10 is example shears with both finger grips linearly offset from the axis to position both grips above the axis; and
FIGURE 11 is an example cross-sectional view 11-11 of the finger grips of FIGURE 2.

### Detailed Description

While the present disclosure is described with reference to several illustrative embodiments and example devices described herein, it should be clear that the present disclosure should not be limited to such embodiments. Therefore, the description of the embodiments provided herein is illustrative of the present disclosure and should not limit the scope of the disclosure as claimed. In addition, while following description references finger grips for shears, it will be appreciated that the disclosure may be applicable with other types of hand tools like pliers, punches, and the like.

Briefly described, a system and a method are disclosed including a cutting tool, such as scissors, snips or shears that overcomes the inherent disadvantages in most existing cutting tools by being easy and convenient to use and, at the same time, facilitate the operation and increase the comfort to the user while enabling the user to cut thicker or harder material by exerting more force without discomfort or undue stress on the user's hand and fingers. The shears are further easy to manipulate and position manually during cutting with less fatigue relative to other types of existing shears. The design of the disclosed shears not only allows comfortable use but also increases the precision and control over the cutting operation.

To achieve the above advantages, as well as others that will become evident hereinafter, a gripping structure for a pair of scissors or shears in accordance with the disclosure includes two levers pivotably connected at a pivot point and form substantially parallel blades at distal ends of said levers when the shears are in a closed position. The blades define a medial cutting plane within which the blades pivotably move about said pivot point between an open and closed positions within the cutting plane and, in a closed position, define a line or longitudinal axis with or in close proximity of the pivot point. Each lever is formed at a proximal end relative to said pivot point with a finger grip, a first finger grip being a superior or an upper finger grip formed above (when looking from upper finger grip towards lower one) the line or axis and having a lower loop portion formed with a substantially flat operating surface closest to and extending longitudinally along a direction generally parallel to said line or axis in said closed position of said blades and arranged in a transverse plane substantially normal to said cutting plane. The upper finger grip is dimensioned and configured to enable substantially full insertion of a thumb metacarpal bone from a right lateral side through said upper finger grip for receiving the ball of the thumb to enable the thumb to be moved to a position on a left lateral side to an orientation substantially parallel to said cutting plane and to position the hand's thenar eminence into abutment against said generally flat operating surface of said first finger grip while positioning at least exterior right lateral portions of said loop in abutment or contact with the palm of the hand beyond the hand's thenar crease and into the region of at least one of the hand's palmar creases. A second finger grip, a lower finger grip, is positioned below said first finger grip and configured and dimensioned to be gripped by at least some of the other four fingers of the hand. In this way, the first finger grip enables the thenar eminence and palm of the hand to oppose the forces applied by the fingers acting on said second finger grip, and forces applied against the thenar eminence are uniformly applied against the thenar muscles and transferred to the hand's palmer surface to enable the thumb to guide the direction of cutting while minimally applying flexing or gripping forces in opposition to forces applied by the other fingers on said second finger grip to thereby eliminate or minimize stress or fatigue of the thumb's flexar muscles.

In various embodiments, A pair of shears are disclosed including a thumb loop to receive a thumb and thenar eminence (TE) of a hand within a conical space created by the thumb loop, a finger loop to receive one or more fingers of the hand other than the thumb, and a first blade corresponding to the thumb loop. The pair of shears further includes a second blade corresponding to the finger loop, in which the TE comes to rest on a sidewall of the conical space when the thumb is inserted into the thumb loop to a full extent.

In various embodiments, a cutting tool is disclosed that includes a first lever having a thumb loop at a first end of the first lever, a second lever coupled with the first lever, the second lever having a finger loop at a first end of the second lever, a first blade integrated with the first lever at a second end of the first lever, and a second blade integrated with the second lever at a second end of the second lever, in which the thumb loop includes a flat operating surface on which the TE of a user's hand comes to rest when a user's thumb is inserted to a full extent.

In various embodiments, a pair of scissors is disclosed including a first lever and a second lever coupled together at a pivot point, a thumb loop integrated with the first lever, the thumb loop having a flat operating surface and a manipulation surface, a finger loop integrated with the second lever to receive one or more fingers other than a thumb, a first blade integrated with the first lever, and a second blade integrated with the second lever.

Many hand-operated tools, such as scissors, shears and snips, have been proposed over the years in numerous configurations to facilitate the cutting of various materials ranging from light or soft materials to heavy materials such as sheet-metal. While the goals of most of these cutting tools have been design to allow for the comfortable use of the tools, most designs frequently cause user stress, strain and fatigue.

While it is generally understood that the strengths of all the fingers of the hand are more or less the same or equal, gripping or squeezing the handles of scissors, shears or snips normally involves one finger, the thumb, acting on one upper finger grip while the remaining four fingers act on the other or opposing finger grip to counter the force applied by the thumb. The thumb, therefore, must apply a disproportionate force by one finger to counter the collective opposing forces applied by the remaining four fingers. This results in increased stresses on the flexor muscles of the thumb. Consequently, this results in user fatigue, especially with extended use and the cutting of heavier materials such as cardboard, sheet-metal and the like.

U.S. Patent 454,735 to Heinisch discloses a shears that includes a broad outwardly and rearwardly extending seat or rest that extends to the outside of the palm of the hand and upon which a portion of the hand rests when the shears are used. Extending from the seat or rest is an extension upon which the thumb and the ball of the thumb rest, the whole palm of the hand being utilized to sustain the weight of the body when operating the shears. However, the extended seat or rest continues to rely on the thumb for application of forces during cutting. Also, the shape of the extension and the seed arrest is convex forming one or more peaks that potentially apply one or more pressure points resulting in excessive points of stress and, with extended use, pain and fatigue to the user. A similar structure is disclosed in related U.S. Patent 760, 204.

U.S. Patent 968, 219 to Wheeler discloses a shears designed to be used for longer time and with less fatigue to the operator. The shears includes an oblique thumb loop that lies in a plane at an angle of 45° to the plane of the finger bow so that inserting the thumb into the bow in alignment with the wrist and after passing through the bow bears against the shank by offsetting the thumb bow. The power applied to operate the thumb bow is applied nearly transversely to the thumb and above the second joint of the thumb. While the orientation of the thumb bow renders the bow more ergonomic the force applied to counter or oppose forces of the remaining four fingers are still primarily supplied by the thumb.

U.S. Patent 4, 635, 363 to Chapin discloses hand-operated cutting tool that includes a ring having a central axis A offset from the central plane or axis B by an angle less than 45°. As with the previous shears, while more ergonomic than other designs, continues to rely on the flexing of the thumb to oppose the forces applied by the other fingers.

U.S. Published Patent Application 2011/0131813 to Lin discloses a grip structure for a pair of scissors. The upper grip portion for receiving the thumb is configured to support a portion of the base of the thumb and configured to receive the thumb at an oblique angle with respect to the blades, as in the previous designs. The design is primarily intended to provide improved stability during opening or closing of the scissors by avoiding undesired deflection of the two blades of the scissors and keeping the two blades in the best vertical state during the cutting process effectively improving the cutting quality and safety.

It is to be noted that directions, orientations, and other relative terms such as "front", "back", "top", "bottom", "left", "right", "inside", "outside", "interior", "exterior", "downward", "upward", "front-facing", "down-facing", "vertical", "horizontal", "diagonal", and the like are described with respect or relative to a distinguishing feature of the system or device body itself. For example, if the front part or surface of a system body or an object is identified in the description, then rear or back is defined as the part or surface opposite the front surface, left is defined as the left side when looking into the front surface, and so on. As long as directions are unambiguously identifiable based on the descriptions and figures, how the orientations are defined is immaterial.

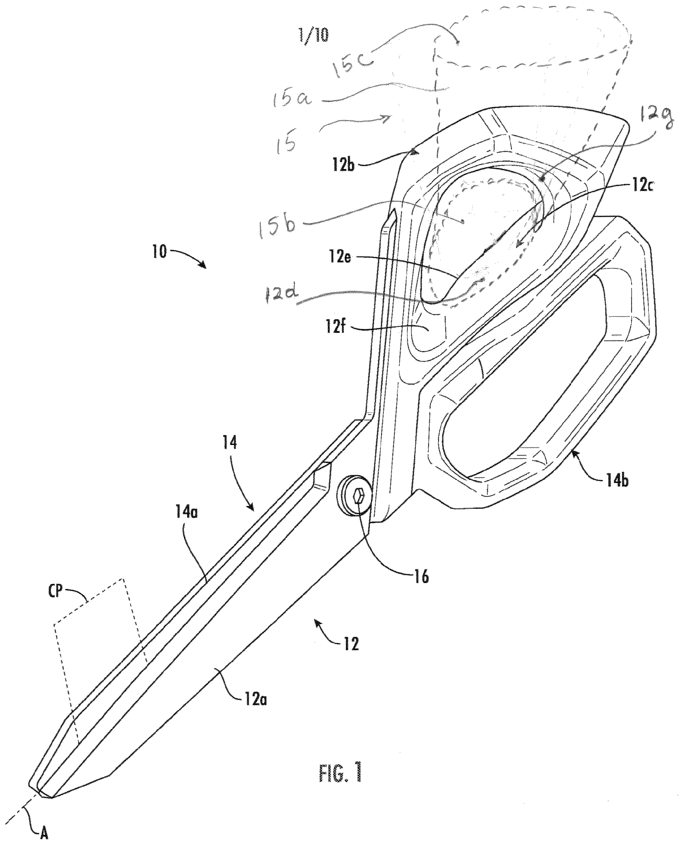

FIGURE 1 is an example left (left side when looking from handles towards tip) perspective view of scissors or shears in accordance with the disclosure, shown in a fully closed condition. In various embodiments, a pair of scissors or shears 10. All such cutting tools will be collectively referred to herein as "shears". The shears 10 includes two levers 12, 14 connected to each other at a pivot 16 forming a pivot point. The levers 12 and 14 form substantially parallel blades 12a and 14a, respectively. The blades 12a and 14a also define a medial cutting plane CP and are pivotably movable about the pivot 16 between open and closed positions within the cutting plane. In a closed position, the blades 12a and 14a define a line or longitudinal axis A with or in close proximity of the pivot 16. The shears 10 further include a first finger loop or grip 12b (a thumb loop) that is an integral part of lever 12, a second or lower finger loop or grip 14b that is an integral part of lever 14, a lower loop portion 12c formed with a substantially flat inner or operating surface 12d, a right exterior lateral portion or edge 12e, and a recessed curved surface 12f, and manipulation surface 12g. The shears 10 further include a conical space 15 having a sidewall 15a, a small end 15b, a large end 15c.

In various embodiments, each lever may be formed at a proximal end relative to the pivot 16 with a finger grip. the first finger grip 12b is a superior or an upper finger grip formed above the line or axis A. The first or upper finger grip is formed above the line or axis A and has a lower loop portion 12c formed with a substantially flat operating surface 12d closest to and extending longitudinally along a direction generally parallel to the line or axis A when the blades are closed.

In various embodiments, the pivot 16 may be a rivet, a bolt and nut, a circular structure, such as a short compact cylinder, with bent outer (away from levers) lip or edge deployed on or integrated with each lever 12 and 14 at the pivoting point that engages the corresponding lip or edge of the circular structure on the other lever.

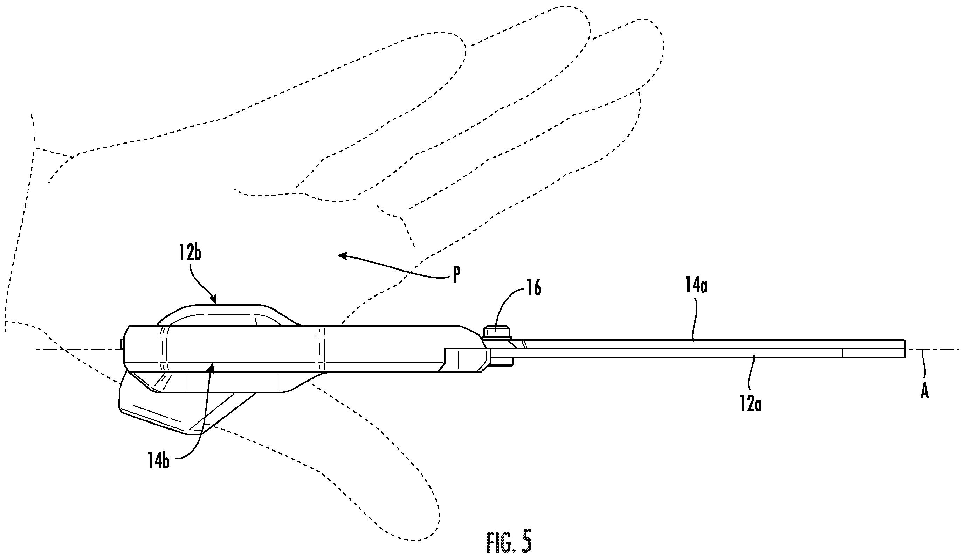

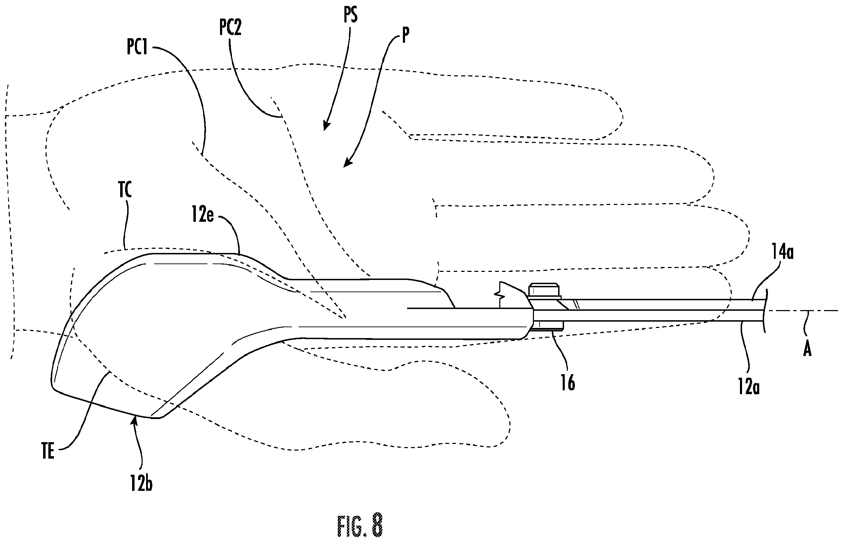

In various embodiments, the first or upper finger or thumb grip 12b is dimensioned and configured to enable substantially full insertion of a thumb metacarpal bone from a right lateral side through the upper finger grip 12b for receiving the ball of the thumb or thenar eminence (TE), as further described with respect to FIGURES 5 and 8 below, from a right lateral side through the finger grip 12(b) and for receiving the ball of the thumb to enable the thumb to be moved to a position on the left lateral side to an orientation substantially parallel to the cutting plane CP and to position the hands' thenar eminence TE into abutment against the generally flat operating surface 12d of the upper finger grip 12b while positioning at least the exterior right lateral portion 12e of the finger grip into abutment or contact with the palm P of the hand, as best shown in FIGURE 8 beyond the hand's thenar crease TC and into the region of at least one of the hand's palmar creases PC1 and PC2.

In various embodiments, the interior surfaces of the upper finger grip 12b may form the partial conical space 15 having the conical sidewall 15a formed on the interior of the finger loop, as shown in the figure. The conical space 15 also defines a physical partial conical surface within the upper finger grip 12b with which the thumb comes in physical contact. The thumb is roughly conical in shape with the finger tip being narrower than its TE, which allows the thumb to fit snugly within this conical passage (conical space 15) formed by the upper finger grip 12b. The conical shape of the interior surfaces of the upper finger 12b allows different size thumbs, within a range of sizes, to sit in and fit within the upper finger grip 12b. In the general case, a conical shape is not necessarily circular in cross-section. It may be construed as a set of similarly shaped contours or slices, circular or non-circular, that gradually increase or decrease in size (as measured by a predefined diameter across the contour or the perimeter around it) stacked on top of each other to form a three-dimensional (3D) shape that is small at one end and large at the other end, much like a circular cone. The end contours are also called base, for example top and bottom bases or large and small bases. The change in size of the slices occurs when traversing the 3D cone-shaped space from one end to the other. The cone-shaped space may be symmetrical or asymmetrical. A symmetrical cone has the same angle between the cone sidewall and its bases, while an asymmetrical space has different angles between the sidewall and bases as the perimeter of the bases are traversed.

The conical space 15 has similar geometric properties. A smaller thumb sinks in a little deeper towards the small end 15b and stops when the TE settles in the conical space 15 at a point along the sidewall 15a that is the same size as the TE. This way, the conical space 15 is selfadjusting to the size of the thumb, within a reasonable range of common hand sizes. To use the shears and have a good fit the user only pushes the thumb into the upper finger grip 12b until the thumb cannot be further moved in, without having to make any other adjustments of any sort.

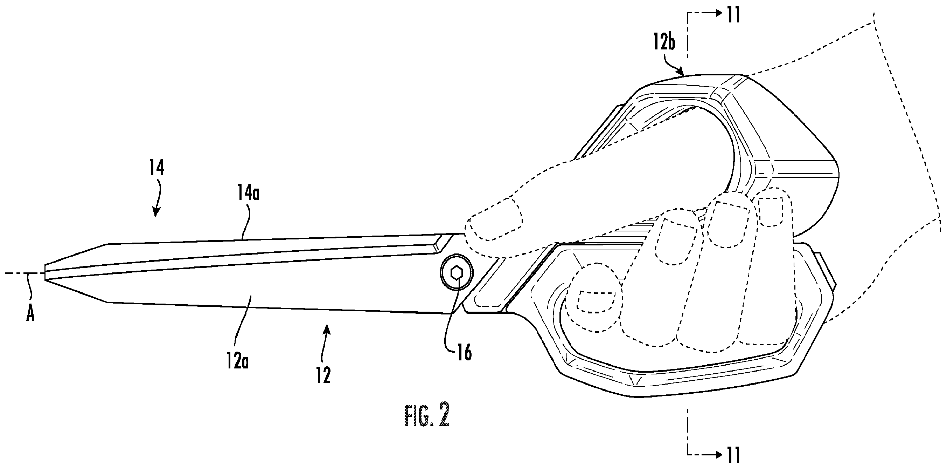

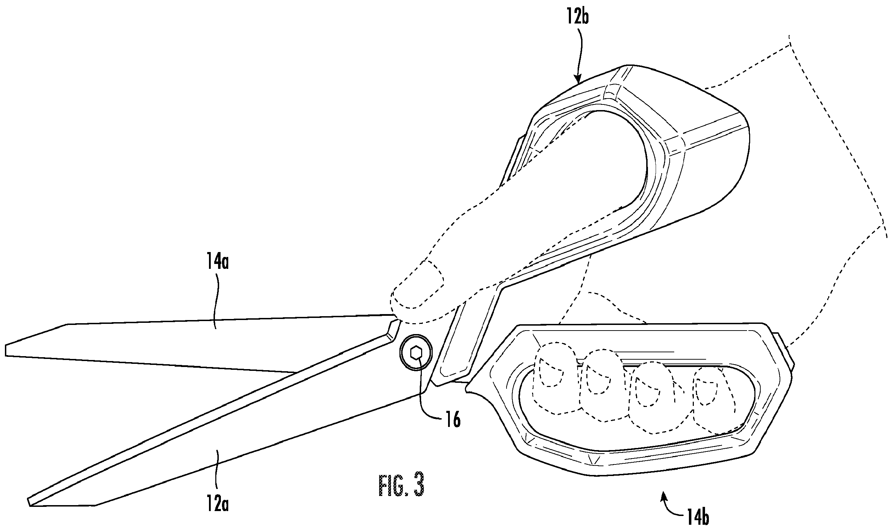

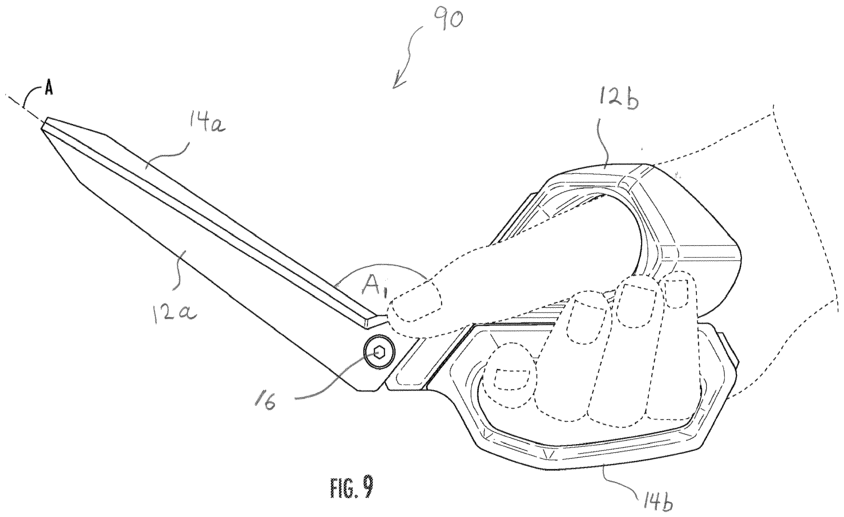

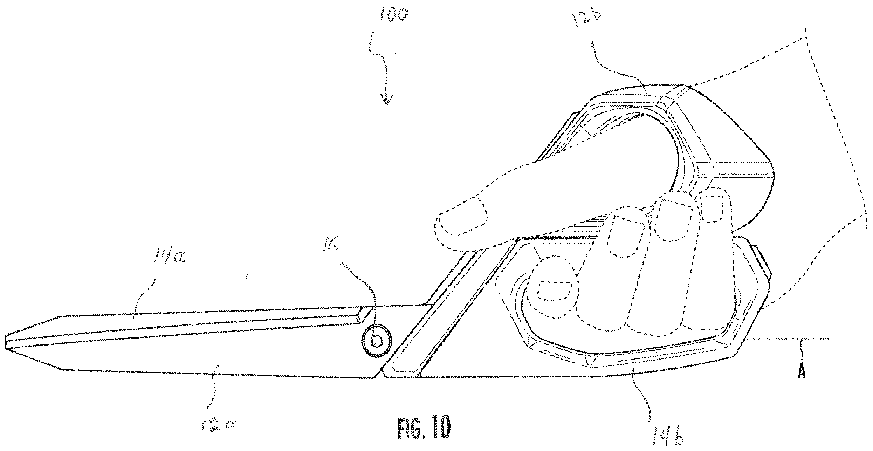

In various embodiments, the second or lower finger grip 14b, may be positioned at a particular place in a particular relationship to the line or axis A. For example, the lower finger grip may be placed below, above, or in an overlapping position with the axis A, as further discussed herein. In various embodiments, the lower finger grip 14b may be configured and dimensioned to be gripped by the other four fingers or at least some of the other four fingers of the hand as further described below with respect to FIGURES 2 and 3. The positions of the finger grips relative to the axis A may be angularly or linearly offset relative to the axis A, as further described with respect to FIGURE 9 and FIGURE 10. The offsets can also position the finger grips below the axis and can result from offsets opposite from the ones shown in FIGURES 9 and 10, and can also include combinations of linear and angular offsets.

In some embodiments, the first or upper finger grip 12b may be configured as an annular loop, which may also include a recessed curved surface 12f at the leading or distal end that is a continuation of the flat operating surface 12d, on the left lateral side, to accommodate the thenar webspace or skin web between the thumb and the index finger, when the thumb is substantially aligned with the blades 12a and 14a. The recessed curved surface 12f may allow a firmer grip on the shears 10 and enhance its manipulation.

In various embodiments, the shears 10 may be right-handed (as shown in FIGURE 1) or left handed, in which the upper finger grip 12b is flipped around a vertical plane that extends from the upper finger grip 12b to lower finger grip 14b.

In various embodiments, in operation, the user inserts a right-hand thumb into the conical space 15 within the upper finger grip 12b and pushes the thumb down towards the small end 15b to the full extent until it cannot go further in that direction. At this point, the TE will be resting upon the flat operating surface 12c. To open the blades 12a and 14a in preparation for cutting a sheet of material, such as paper, cardboard, plastic, thin metal sheet, fabric, and the like, the user's hand extends outward and the back of the thumb (opposite palm of the hand) pushes against the manipulation surface 12g causing the blades 12a and 14a to move apart. The manipulation surface 12g is substantially across, or sufficiently separated, from the operating surface 12d to operate the blades 12a and 14a in reverse (opening the blades). To cut the material, the user squeezes the whole hand using muscles that drive the four fingers, excluding the thumb, and the muscles of TE. The two front segments of the thumb are not directly engaged with the operating surface 12d, and hence the force of closing the shears blades 12a and 14a does not originate from the thumb itself, but from the stronger muscles of the palm of the hand, including the TE. This configuration allows stronger closing force

FIGURE 2 is an example left lateral side view of the scissors or shears shown in FIGURE 1, showing in phantom outline the positions of the fingers of the hand during normal use. In various embodiments, the left lateral view shows a section 11-11, upper finger grip 12b, pivot 16, levers 12 and 14, and blades 12a and 14a.

In various embodiments, when the thumb is inserted into the upper finger grip 12b and comes to rest, the thumb will be substantially positioned parallel to the blades 12a and 14a and/or the axis A. In this position, the shears 10 may be manipulated in various ways, such as twisting it around the axis A, moved or tilted side to side, moved or tilted up and down, using the full power of the wrist and the hand, rather than fingers. Such manipulations may be done to gain a better position for cutting the material from slightly different angles, which may be needed when cutting thick or tough materials. When pressing down on the finger grips 12b and 14b, the user squeezes the hand as in making a fist, which is more powerful than using fingers using regular scissors due to use of larger muscles. This arrangement reduces fatigue and makes manipulations easier and more powerful. Fatigue is reduced because larger muscles can work more effectively and longer than small muscles doing the same work. Because the thumb and TE is snugly surrounded by the conical surface within the upper finger grip 12b, when the hand moves, twists, tilts up and down or side to side, the shears 10 follow the same motions and is thus effectively manipulated without excessive physical slop and slippage of shears 10 in user's hand.

FIGURE 3 is an example left lateral side view of the scissors or shears shown in FIGURE 1, showing in phantom outline the positions of the fingers of the hand during normal use of shears in a partially open condition. In various embodiments, the left lateral side view includes upper finger grip 12b, lower finger grip 14b, pivot 16, and blades 12a and 14a.

In various embodiments, as noted above with respect to FIGURE 2, when the thumb is inserted into the upper finger grip 12b and comes to rest, the thumb will be substantially positioned parallel to the blades 12a and 14a and/or the axis A. In this position, the shears 10 may be manipulated in various ways, such as twisting it around the axis A, moved or tilted side to side, moved or tilted up and down, using the full power of the wrist and the hand, rather than fingers. Such manipulations may be done to gain a better position for cutting the material from slightly different angles, which may be needed when cutting thick or tough materials. When pressing down on the finger grips 12b and 14b, the user squeezes the hand as in making a fist, which is more powerful than using fingers using regular scissors due to use of larger muscles.

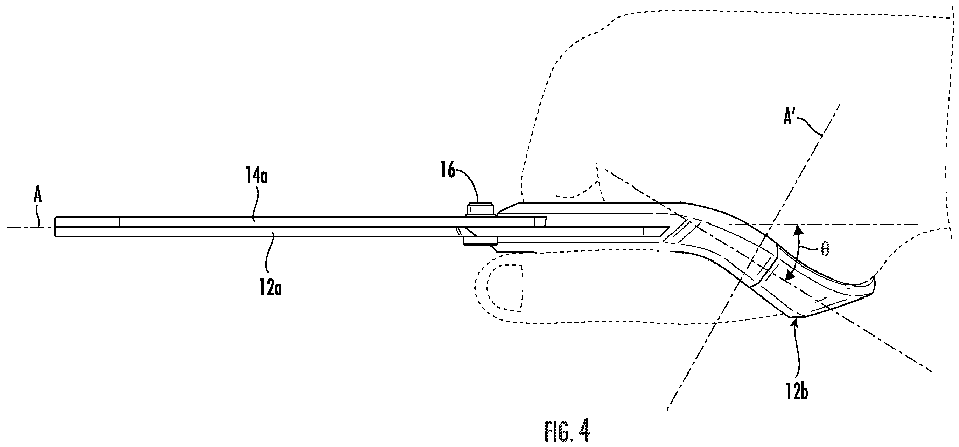

FIGURE 4 is an example top (when looking from thumb loop of shears towards the fingers loop) view of the scissors or shears shown in FIGURES 1-3. In various embodiments, the top view incudes upper finger grip 12b, angle Θ between the axis A and an orientation of the upper finger grip 12b bent away from the axis A, as shown. The top view also show pivot 16 and blades 12a and 14a and a central axis A'.

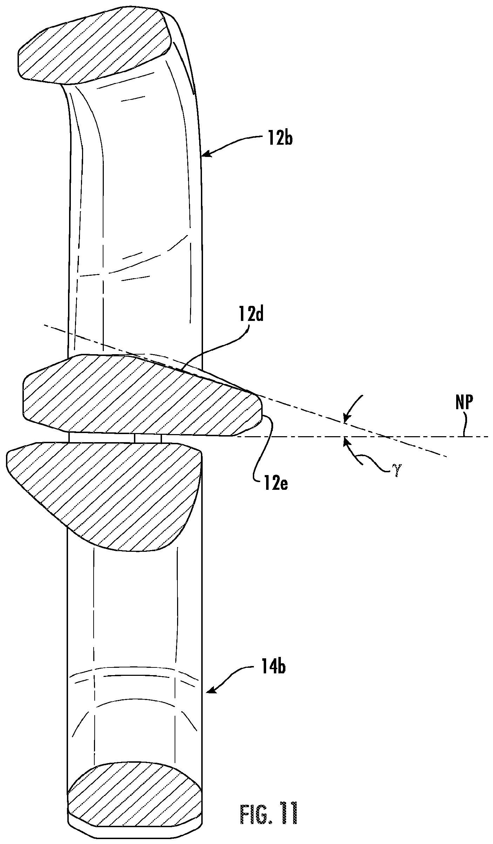

In various embodiments, the upper finger grip 12b defines a central axis A' that diverges or is angularly offset from the cutting plane CP or the axis A at an angle Θ that is within the range of 50°-60°. Preferably, the angle Θ is equal to approximately 55°. The operating surface 12d is substantially flat, as further described with respect to FIGURE 11 below, to distribute the forces uniformly across the thenar eminence or the ball of the thumb and the thenar muscles. Without having any significant curvature or peaks on this surface, force concentrations on the thenar muscles are reduced or avoided, preventing potentially significant pain to the user. Also, to render the tool more ergonomic and comfortable to use the flat operating surface 12d may be somewhat inclined upwardly from the right lateral side towards the left lateral side to conform to the shape of the hand while in gripping engagement with the upper finger grip 12b. The inclination of the flat surface is best shown in FIGURE 11 where the surface is shown inclined downwardly from the left to the right side relative to a plane NP substantially normal to the cutting plane CP. The inclination angle γ is within the range of 10°-20° and, preferably within the range 15°-17°.

FIGURE 5 is an example bottom (opposite direction of top) view of the scissors or shears shown in FIGURES 1-4, showing in phantom outline the position of the hand during initial insertion of the thumb and prior to gripping of the handles. In various embodiments, the bottom view includes hand palm P, upper finger grip 12b, lower finger grip 14b, pivot 16, and blades 12a and 14a.

In various embodiments, in preparation for use of the shears, the thumb is fully inserted into the upper finger grip 12b so that the thenar eminence TE rests upon the substantially flat surface 12d and the thumb can be moved to a folded or closed position to securely hold the shears 10. This is further described below with respect to FIGURE 8.

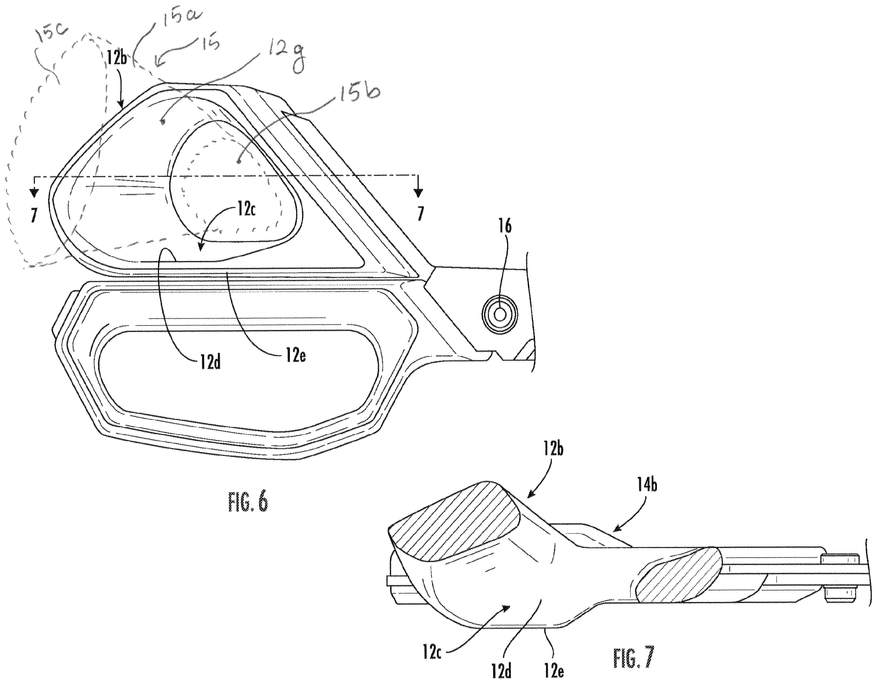

FIGURE 6 is an example enlarged fragmented view, as viewed from the right (opposite direction of left) lateral side to show details of the configuration of the upper finger grip (thumb loop). In various embodiments, the fragmented view includes the upper finger grip 12b, the lower finger loop or grip 14b, a pivot 16, a cross section 7-7, a lower loop portion 12c formed with the substantially flat inner or operating surface 12d, a right exterior lateral portion or edge 12e, and manipulation surface 12g. The fragmented view further includes the conical space 15 with the sidewall 15a, the small end 15b, and the large end 15c.

In various embodiments, the conical space 15 creates a passage for the thumb to be inserted into. As shown in this figure, the thumb enters from the large end 15c of the conical space15 and continue until the TE rests on the flat operating surface 12d. As described before with respect to FIGURE 1, this position of the thumb allows a firm grip for cutting and manipulation of the shears 10.

FIGURE 7 is an example cross-sectional view 7-7 of the upper finger grip of FIGURE 6. In various embodiments, the cross-sectional view 7-7 includes a portion of the upper finger grip 12b, the lower loop portion 12c, the inner flat operating surface 12d, the right exterior lateral portion or edge 12e, and a portion of the lower finger grip 14b.

In various embodiments, the cross-sectional view 7-7 shows the details of the flat operating surface 12d where the thumb would rest when using the shears 10. This view also shows some of the angular contours of the upper finger grip 12b.

FIGURE 8 is an example bottom view of the scissors or shears shown in the previous Figures, broken away to illustrate the lower configuration of the upper finger grip and the manner that it is arranged in relation to the thenar eminence and the palmer surfaces of the hand. In various embodiments, the bottom view includes the upper finger grip 12b, the right exterior lateral portion or edge 12e, the blades 12a and 14a, and the pivot 16. The bottom view further shows various parts of the hand anatomy including thenar crease TC, thenar eminence TE, palm P, palmar surface PS, and palmar creases PC1 and PC2.

In various embodiments, when the thumb is substantially aligned with the blades 12a and 14a, and once the fingers are flexed to gripping positions, the right exterior lateral portion or edge 12e is placed into abutment with the palmar surface PS, beyond the thenar crease TC and into contact with the palmar creases PC1 and/or PC2. The thumb, once in the position shown in FIGURE 3, serves to primarily stabilize and guide the direction of cutting while eliminating or substantially reducing the flexing forces applied by the thumb in opposition or to counter the squeezing forces of the other four fingers that act on the lower finger grip 14b, those forces being absorbed or countered by the palm of the hand. Thus, the thenar muscles do not need to flex much during operation of the shears but can remain substantially stationary, substantially reducing stress and strain on the thumb. The design is not only ergonomic but renders the shears more comfortable and easy to use while avoiding fatigue especially with prolonged use or while cutting heavier materials.

FIGURE 9 is example shears with both finger grips angularly offset from a center axis of the shears to position both grips above the axis (axis closest to lower finger grip). In various embodiments, the angled shears 90 includes upper finger grip 12b, lower finger grip 14b, , pivot 16, blades 12a and 14a, axis A, and angle A1 between axis A and an upper edge of the upper finger grip 12b.

In various embodiments, the angled shears 90 and all of its components are constructed and operate the same way as shears 10 of FIGURE 1 in most respects. The upper finger grip 12b and the lower finger grip 14b, however, are designed to be at an angular offset with respect to the axis A. The angular offset of the finger grips may be above the axis A or below it (not shown). This configuration may be more suitable and convenient for the user in some applications. For example, if the workpiece to be cut is placed on a surface lower than the user's waist, then angular offset above the axis A may be more convenient to use. While, if the workpiece to be cut slopes downwards and away from the user, then angular offset below the axis A may more convenient and effective to use by providing better or more natural leverage.

FIGURE 10 is example shears with both finger grips linearly offset from the axis to position both grips above the axis. In various embodiments, offset shears 100 includes upper finger grip 12b, lower finger grip 14b, pivot 16, blades 12a and 14a, and axis A.

In various embodiments, the offset shears 100 and all of its components are constructed and operate the same way as shears 10 of FIGURE 1 in most respects. The upper finger grip 12b and the lower finger grip 14b, however, are designed to be at a linear offset with respect to the axis A. The linear offset of the finger grips may be offset parallel to and above the axis A. This configuration may be more suitable and convenient for the user in some applications. For example, if the workpiece to be cut is placed on a flat cutting surface and is longer than the length of the offset shears 100, it may be more convenient and effective to use the linearly offset shears 100 to cut the workpiece by eliminating interference of the flat cutting surface with the finger grips. This way, the lower finger grip 14b can slide and advance along the flat cutting surface as the workpiece is cut, while keeping the axis A of the cutting blades 12a and 14a parallel with the workpiece (not at an angle).

FIGURE 11 is an example cross-sectional view 11-11 of the finger grips of FIGURE 2. In various embodiments, the cross-sectional view 11-11 includes a section of the lower finger grip 12b, the upper finger grip 14b, the flat inner or operating surface 12d, the right exterior lateral portion or edge 12e, and the angle Y between the flat operating surface 12d and a neutral plane NP perpendicular to the axis A, as shown in the figure.

In various embodiments, the cross-sectional view 11-11 shows another view of the relationship between the upper finger grip 12b and lower finger grip 14b, when the shears 10 (see FIGURE 1) is in a closed position with blades 12a and 14a touching. The angle Y is also the same as the angle of the sidewall of the conical space 15 at some portions of the perimeter of the large end 15c. As noted above, the conical space 15 formed by the upper finger grip 12b is not a circular cone, but an irregular shape defined by the contours of the upper finger grip 12b.

It will be understood that unless explicitly stated or specified, the steps described in a process are not ordered and may not necessarily be performed or occur in the order described or depicted. For example, a step A in a process described prior to a step B in the same process, may actually be performed after step B. In other words, a collection of steps in a process for achieving an end-result may occur in any order unless otherwise stated.

Changes can be made to the claimed disclosure in light of the above Detailed Description. While the above description details certain embodiments of the disclosure and describes the best mode contemplated, no matter how detailed the above appears in text, the claimed disclosure can be practiced in many ways. Details of the system may vary considerably in its implementation details, while still being encompassed by the claimed disclosure disclosed herein.

Particular terminology used when describing certain features or aspects of the disclosure should not be taken to imply that the terminology is being redefined herein to be restricted to any specific characteristics, features, or aspects of the disclosure with which that terminology is associated. In general, the terms used in the following claims should not be construed to limit the claimed disclosure to the specific embodiments disclosed in the specification, unless the above Detailed Description section explicitly defines such terms. Accordingly, the actual scope of the claimed disclosure encompasses not only the disclosed embodiments, but also all equivalent ways of practicing or implementing the claimed disclosure.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to disclosures containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." It is further understood that any phrase of the form "A/B" shall mean any one of "A", "B", "A or B", or "A and B". This construct includes the phrase "and/or" itself.

The above specification, examples, and data provide a complete description of the manufacture and use of the claimed disclosure. Since many embodiments of the claimed disclosure can be made without departing from the spirit and scope of the disclosure, the disclosure resides in the claims hereinafter appended. It is further understood that this disclosure is not limited to the disclosed embodiments, but is intended to cover various arrangements included within the spirit and scope of the broadest interpretation so as to encompass all such modifications and equivalent arrangements.

## Claims

1. A pair of shears comprising:
a thumb loop to receive a thumb and thenar eminence (TE) of a hand within a conical space created by the thumb loop;
a finger loop to receive one or more fingers of the hand other than the thumb; and
a first blade corresponding to the thumb loop;
a second blade corresponding to the finger loop;
wherein the TE comes to rest on a sidewall of the conical space when the thumb is inserted into the thumb loop to a full extent.

2. The pair of shears of claim 1, further comprising a flat operating surface on the thumb loop on which the TE rests.

3. The pair of shears of claim 2, further comprising a manipulation surface across from the flat operating surface to open the first blade and the second blade around a pivot point.

4. The pair of shears of claim 1, wherein the conical space includes a large end and a small end, the large end being a point of insertion of the thumb.

5. The pair of shears of claim 1, wherein to close the first blade and the second blade to cut a material, muscles of TE are used independently of muscles of the thumb.

6. The pair of shears of claim 4, wherein the conical space comprises non-circular contours with decreasing size when traversed from the large end to the small end.

7. The pair of shears of claim 1, further comprising a recessed curved surface on the thumb loop to enhance manipulation of the pair of shears.

8. The pair of shears of claim 1, wherein the thumb loop and the finger loop are on a same side of an axis defined by the first blade and the second blade in a closed position.

9. A cutting tool comprising:
a first lever having a thumb loop at a first end of the first lever;
a second lever coupled with the first lever, the second lever having a finger loop at a first end of the second lever;
a first blade integrated with the first lever at a second end of the first lever; and
a second blade integrated with the second lever at a second end of the second lever;
wherein the thumb loop includes a flat operating surface on which a thenar eminence (TE) of a user's hand comes to rest when a user's thumb is inserted to a full extent.

10. The cutting tool of claim 9, further comprising a manipulation surface across from the flat operating surface.

11. The cutting tool of claim 9, further comprising a recessed curved surface on the thumb loop to enhance manipulation of the pair of shears.

12. The cutting tool of claim 9, wherein the thumb loop forms a conical space with a non-circular cross-section.

13. The cutting tool of claim 9, wherein the first blade and the second blade are pivotably coupled.

14. The cutting tool of claim 9, wherein the first blade and the second blade are closed to cut a material using muscles of the TE.

15. A pair of scissors comprising:
a first lever and a second lever coupled together at a pivot point;
a thumb loop integrated with the first lever, the thumb loop having a flat operating surface and a manipulation surface;
a finger loop integrated with the second lever to receive one or more fingers other than a thumb;
a first blade integrated with the first lever; and
a second blade integrated with the second lever.

16. The pair of scissors of claim 15, further comprising a conical surface formed by the thumb loop.

17. The pair of scissors of claim 15, further comprising a recessed curved surface on the thumb loop to enhance manipulation of the pair of shears.

18. The pair of scissors of claim 15, wherein the flat operating surface and the manipulation surface are across from each other.

19. The pair of scissors of claim 15, wherein the manipulation surface is useable to open the blades around the pivot point.

20. The pair of scissors of claim 15, wherein the first blade and the second blade are closed using muscles of a thenar eminence (TE) of a user's hand in a squeezing action of the user's hand.
